# EUROPEAN PATENT SPECIFICATION

(11) **EP 2 831 732 B1**
(45) Date of publication and mention of the grant of the patent: **09.06.2021**
(21) Application number: 13721423.5
(22) Date of filing: 25.03.2013
(51) Int. Cl.: G06F 9/48, G06F 9/50

(54) **SYSTEM AND METHOD FOR SUPPORTING LIVE MIGRATION OF VIRTUAL MACHINES IN AN INFINIBAND NETWORK**
SYSTEM UND VERFAHREN ZUR UNTERSTÜTZUNG VON LIVE-MIGRATION VIRTUELLER MASCHINEN IN EINEM INFINIBAND-NETZWERK
SYSTÈME ET PROCÉDÉ DE PRISE EN CHARGE DE LA MIGRATION À CHAUD DE MACHINES VIRTUELLES DANS UN RÉSEAU INFINIBAND

(30) Priority: 26.03.2012 US 201261615731 P; 27.08.2012 US 201261693703 P; 15.03.2013 US 201313838275; 15.03.2013 US 201313837922; 15.03.2013 US 201313838121; 15.03.2013 US 201313838502
(43) Date of publication of application: 04.02.2015
(73) Proprietor: Oracle International Corporation, Redwood Shores, California 94065 (US)
(72) Inventor: GUAY, Wei Lin, Penang 11950 (MY); JOHNSEN, Bjorn Dag, N-0687 Oslo (NO)
(74) Representative: D Young & Co LLP
(86) International application number: PCT/US2013/033752
(87) International publication number: WO 2013/148598

(56) References cited:
- US-A1- 2008 189 432
- US-A1- 2012 042 034

## Description

### Field of Invention:

The present invention is generally related to computer systems, and is particularly related to supporting computer system virtualization.

### Background:

As larger cloud computing architectures are introduced, the performance and administrative bottlenecks associated with the traditional network and storage have become a significant problem. The InfiniBand (IB) technology has seen increased deployment as the foundation for a cloud computing fabric. This is the general area that embodiments of the invention are intended to address. US 2012/042034 A1 discloses a method to migrate a virtual machine from a source computing machine to a destination computing machine. US 2008/0189432 A1 discloses a method and system for virtual machine migration in an InfiniBand network.

### Summary:

The invention is defined by the amended claims.

### Brief Description of the Figures:

**Figure 1** shows an illustration of the live migration of a virtual machine in a virtualization environment, in accordance with an embodiment of the invention.
**Figure 2** illustrates an exemplary flow chart for supporting the live migration of a virtual machine in a virtualization environment, in accordance with an embodiment of the invention.
**Figure 3** shows an illustration of a process ID (PID) to queue pair number (QPN) translation table, in accordance with an embodiment of the invention.
**Figure 4** shows an illustration of reallocating location dependent communication resources, in accordance with an embodiment of the invention.
**Figure 5** shows an illustration of using a deterministic state to suspend and resume a queue pair (QP), in accordance with an embodiment of the invention.
**Figure 6** shows an illustration of the live migration of a virtual machine using a bottom-up approach, in accordance with an embodiment of the invention.
**Figure 7** shows an illustration of reactivating the virtual machine after migration, in accordance with an embodiment of the invention.
**Figure 8** shows an illustration of two queue pairs (QPs) before the live migration of a virtual machine, in accordance with an embodiment of the invention.
**Figure 9** shows an illustration of two queue pairs (QPs) in communication after the live migration of a virtual machine, in accordance with an embodiment of the invention.

### Detailed Description:

The invention is illustrated, by way of example and not by way of limitation, in the figures of the accompanying drawings in which like references indicate similar elements. It should be noted that references to "an" or "one" or "some" embodiment(s) in this disclosure are not necessarily to the same embodiment, and such references mean at least one.

The description of the invention as following uses the Infiniband (IB) network as an example for a high performance network. It will be apparent to those skilled in the art that other types of high performance networks can be used without limitation. Also, the description of the invention as following uses the Xen virtualization model as an example for a virtualization model. It will be apparent to those skilled in the art that other types of virtualization models can be used without limitation.

Described herein are systems and methods that can support virtual machine (VM) live migration in a network.

In accordance with an embodiment of the invention, virtualization can be beneficial to efficient resource utilization and elastic resource allocation in cloud computing. Live migration makes it possible to optimize resource usage by moving virtual machines (VMs) between physical servers in an application transparent manner. Thus, virtualization can enable consolidation, on-demand provisioning of resources, and elasticity through live migration.

### InfiniBand (IB) Architecture

The IB Architecture is a serial point-to-point full-duplex technology. The IB networks can be referred to as subnets, wherein a subnet consists of a set of hosts interconnected using switches and point to point links. An IB subnet can include at least one subnet manager (SM), which is responsible for initializing and bringing up the network, including the configuration of all the switches, routers and host channel adaptors (HCAs) in the subnet.

IB supports a rich set of transport services in order to provide both remote direct memory access (RDMA) and traditional send/receive semantics. Independent of the transport service used, the IB HCAs communicate using queue pairs (QPs). A QP is created during the communication setup, and can have a set of initial attributes such as QP number, HCA port, destination LID, queue sizes, and transport service that are supplied. An HCA can handle many QPs, each QP consists of a pair of queues, such as a send queue (SQ) and a receive queue (RQ), and there is one such pair present at each end-node participating in the communication. The send queue holds work requests to be transferred to the remote node, while the receive queue holds information on what to do with the data received from the remote node. In addition to the QPs, each HCA has one or more completion queues (CQs) that are associated with a set of send and receive queues. The CQ holds completion notifications for the work requests posted to the send and receive queue. Even though the complexities of the communication are hidden from the user, the QP state information is kept in the HCA.

### Input/Output (I/O) virtualization

I/O Virtualization (IOV) can provide availability of I/O by allowing VMs to access the underlying physical resources. The combination of storage traffic and inter-server communication impose an increased load that may overwhelm the I/O resources of a single server, leading to backlogs and idle processors as they are waiting for data. With the increase in number of I/O requests, IOV can provide availability; and can improve performance, scalability and flexibility of the (virtualized) I/O resources to match the level of performance seen in modern CPU virtualization.

There can be different types of IOV technologies, such as emulation, paravirtualization, direct assignment (DA), and single root-I/O virtualization (SR-IOV). Among these IOV technologies, SR-IOV can extend the PCI Express (PCIe) specification with the means to allow direct access to a single physical device from multiple VMs while maintaining near to native performance. Thus, SR-IOV can provide good performance and scalability.

SR-IOV allows a PCIe device to expose multiple virtual devices that can be shared between multiple guests by allocating one virtual device to each guest. Each SR-IOV device has at least one physical function (PF) and one or more associated virtual functions (VF). A PF is a normal PCIe function controlled by the virtual machine monitor (VMM), or hypervisor, whereas a VF is a light-weight PCIe function. Each VF has its own base address (BAR) and is assigned with a unique requester ID that enables I/O memory management unit (IOMMU) to differentiate between the traffic streams to/from different VFs. The IOMMU also apply memory and interrupt translations between the PF and the VFs.

There can be different types of SR-IOV models, e.g. a shared port model and a virtual switch model. In the shared port model, all the VFs can share a single port address and a single QP name space, and only a single HCA port is exposed to the network. In the virtual switch model, each VF is a virtual HCA that contains a unique port address and a unique QP name space, and one HCA for each VF on the device is exposed to the network. Thus, the virtual switch model can simplify IOV with more complex hardware.

The use of an SR-IOV capable device can yield near native performance and improved scalability. On the other hand, SR-IOV may not be fully incompatible with live migration and checkpoint/restart mechanisms.

### Live Migration

In accordance with an embodiment of the invention, the virtualization environment allows the live migration of virtual machines, i.e. moving a running VM from one machine to another without disrupting the applications running on the VM.

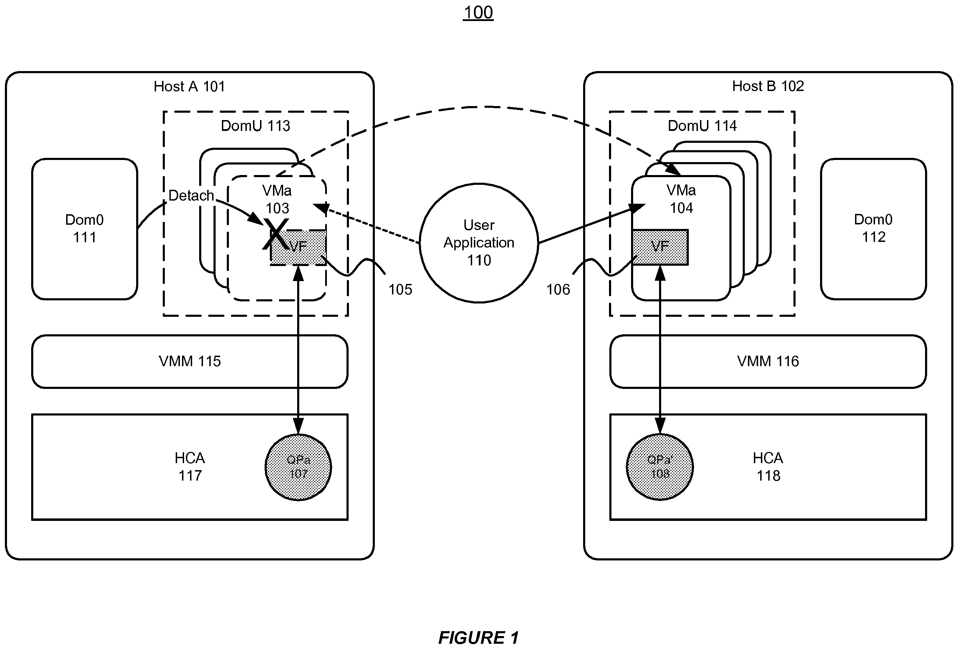

**Figure 1** shows an illustration of the live migration of a virtual machine in a virtualization environment, in accordance with an embodiment of the invention. As shown in Figure 1, a plurality of hosts, e.g. hosts A-B 101-102, are interconnected via an IB network 100. A VM, e.g. VMa 103 can migrate from a host, e.g. host A 101, to another host, e.g. host B 102 (as VMa 104).

Further as shown in Figure 1, each host can include a VMM that uses a HCA. For example, the VMM A 115 in host A 101 uses a HCA 117 and the VMM B 116 in host B 102 uses a HCA 118. Additionally, the VMa 103 is attached with a VF, e.g. VF 105, which is connected to a queue pair, e.g. QPa 107.

From the VMM perspective, a three-stage migration process can be performed to migrate the VMa 103, which is attached with a VF 105, from the host A 101 to the host B 102.
Stage 1: Detach the VF 105 from the VMa 103.
Stage 2: Migrate the VMa 103 from the host A 101 to the host B 102 (as VMa 104).
Stage 3: Attach a new VF 106 to the VMa 104.

Using the Xen virtualization model, each host includes a privileged domain and a guest domain that includes one or more guest VMs. For example, the host A 101 can include a privileged domain, DomO 111, and a guest domain, Dom U 113, and the host B 102 can include a privileged domain, DomO 112, and a guest domain, Dom U 114.

As shown in Figure 1, the privileged domain, DomO 111, can generate a virtual interrupt to the guest domain, DomU 113, for detaching a VF 105 by unloading its device driver. For example, a hot-plug mechanism supported by the hypervisors to disconnect a PCIe device can be used to detach the VF 105.

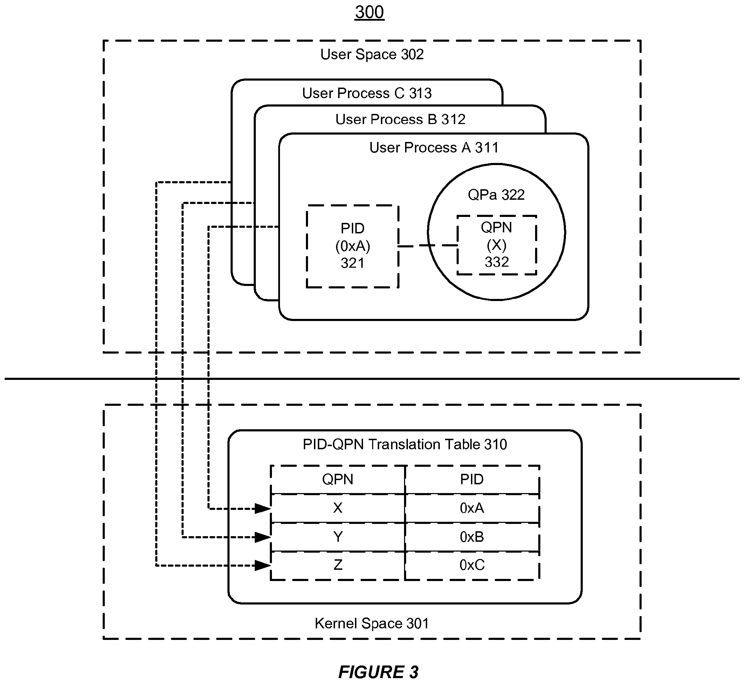

In accordance with an embodiment of the invention, the system uses a PID-QPN translation table for detaching a VF 105 from the VMa 103. When a QPa 107 is created, the PID of the user application 110 can be registered in the PID-QPN translation table, which resides in the kernel space of the VMa 103. Then, based on the PID-QPN translation table, which can be shown in Figure 3, the VF 105 can be detached successfully in the situation when an active QP, e.g. QPa 107, exists and connects to the VF105. Furthermore, a VF 106, which contains a new virtual globally unique identifier (vGUID) and a new local identifier (LID), can be attached to the VMa 104, after the VMa 103 migrates from host A 101 to host B 104 (as the VMa 104).

In an IB network, the QP resources can be managed directly by the hardware, and may only be accessed by software through an opaque handle. Thus, when the VF 106 is attached to VMa 104, the user application may have an invalid opaque handle that is pointed to QPa 107. This is because that the virtual address for the physical memory pinned by the user process has changed and the opaque handle created during the memory registration can become invalid.

A translation mechanism can be used to handle the location dependent resources for the QP. Each QP context contains location-dependent attributes that are associated with an HCA and host. Using the translation mechanism, these location-dependent attributes can be recreated after migration. Furthermore, in order to maintain application transparency, the virtual addresses in the user process can be reallocated after the migration in order to have them pinned to the correct physical memory at the new location.

Additionally, IB network can use a deterministic state for suspending and resuming a QP before and after the live migration of a VM. This deterministic state can be used to migrate QP state between two different physical devices and prevent any dropped packets or out-of-order packets that may cause a fatal error in the IB network 100, which may be a lossless network. Then, at the time of migration, the migrating VMa 103 can migrate the outstanding packets in each QP that has not yet been transferred through the wire.

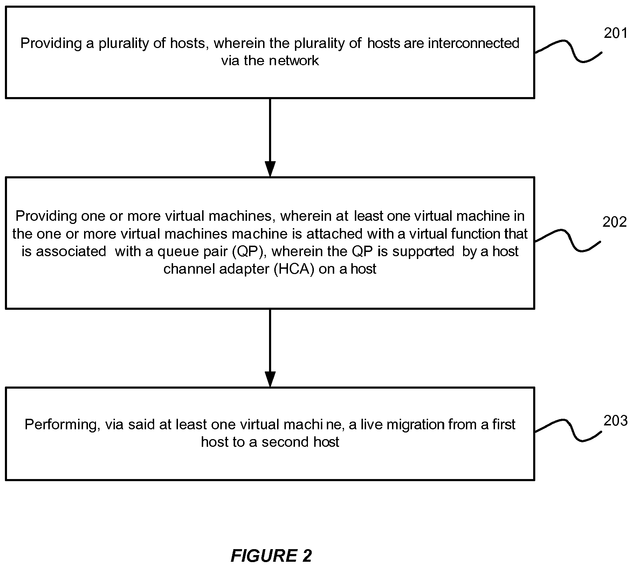

**Figure 2** illustrates an exemplary flow chart for supporting the live migration of a virtual machine in a virtualization environment, in accordance with an embodiment of the invention. As shown in Figure 2, at step 201, a plurality of hosts that contains one or more virtual machines machines are inter-connected via the network. Then, at step 202, at least one virtual machine is attached with a virtual function that is associated with a queue pair (QP), wherein the QP is supported by a host channel adapter (HCA) on a host. Furthermore, at step 203, said at least one virtual machine can perform a live migration from a first host to a second host.

### The Process ID (PID) to Queue Pair Number (QPN) Translation Table

**Figure 3** shows an illustration of a process ID (PID) to queue pair number (QPN) translation table, in accordance with an embodiment of the invention. As shown in Figure 3, a virtual machine (VM) environment 300 includes a kernel space 301 and a user space 302.

The user space 302 includes one or more user processes, e.g. user processes A-C 311-313, each of which is assigned with a process ID (PID). For example, a process ID (PID) 321 can be assigned to a user process A 311.

Furthermore, each user processes A-C 311-313, uses one or more queue pairs (QPs) to communicate with other processes in the system. For example, the user process A 311 can use QPa 322, which is associated with a queue pair number (QPN) 332.

In order to identify the correct user process before and after the live migration of a virtual machine 300, the kernel space 301 maintains a translation table 310 that relates the QPs for the virtual machine 300 to the different user process that use the QPs.

For example, the translation table 310 can map a QPN 332 (with a value x) for the QPa 322 to the PID 321 (with a value 0xA) that is assigned to the user process A 311. Additionally, the translation table 310 can have entries for mapping QPs to other user processes, such as user processes B-C 312-313.

The PID 321 for the user process A 311 can be registered with the translation table 310 when the QPa 322 is created, and the PID 321 for the user process A 311 can be unregistered when the QPa 322 is destroyed.

In the example of Xen-based architecture, a privileged domain in the virtual machine 300 tries to detach an IB VF when a registered QPN 332 exists, by triggering an event for notifying the user process A 311 with the registered PID 321 to release the pinned memory. After the pinned memory by the user process A 311 is released, the QPa 322 belonging to the user process A 311 is suspended until it receives a resume event. As a result, the kernel space 301 module is unloaded and the VF connected to the QPa 322 detached from the VM 300 successfully.

Furthermore, in order to resolve the lack of interaction between the user space 302 and the kernel space 301, the system can configure a user space callback function that can be triggered by the kernel space 301 before de-registering the PCI IB module.

### Location Dependent Communication Resources

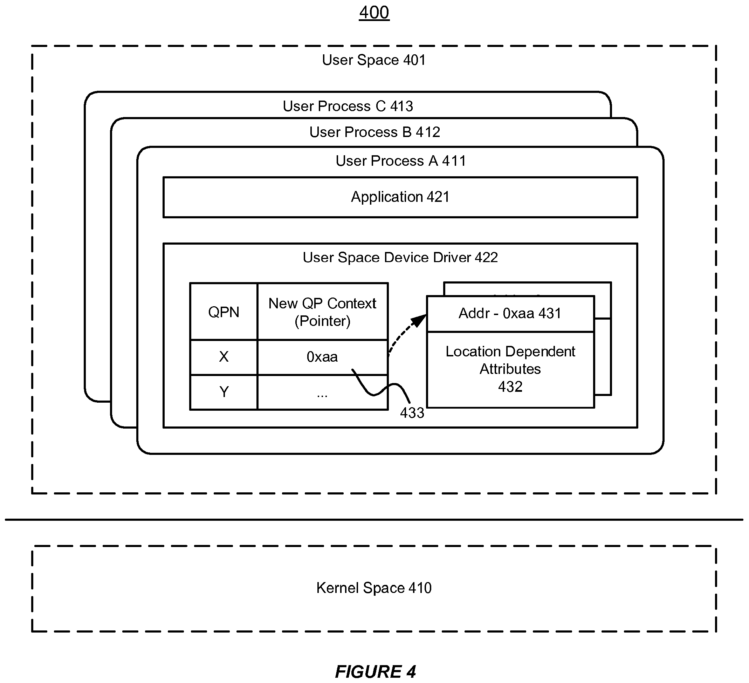

**Figure 4** shows an illustration of reallocating location dependent communication resources, in accordance with an embodiment of the invention. As shown in Figure 4, the virtual machine environment 400 includes a kernel space 410, and a user space 401 with one or more user processes, e.g. user processes A-C 411-413.

In order to avoid conflictions with other QPNs at the destination host after migration, each user process A-C 411-413 has a mapping table that can minimize the time to search and retrieve the updated QP attributes.

The user process A 411 can have a mapping table 433, which can be implemented as part of the user space library, e.g. a user space device driver 422, for the user process A 411. Additionally, the size of the mapping table 433 can be maintained in relative small size, since each user process A-C 411-413 can have its own mapping table.

Furthermore, the mapping table 433 is used to retrieve the updated location dependent QP attributes after a new IB VF is attached at the destination host. Instead of using one mapping table for each QP attribute, the mapping table 433 only contains a pointer to the new QP attributes that are stored in the memory (with the old QPN used as the key). As shown in Figure 4, in the mapping table 433, a first QPN value, X, is associated with a QP context pointer, 0xaa, which stores the address 431 of the location dependent attributes 432.

In accordance with an embodiment of the invention, the QP context includes several location-dependent attributes 432, such as the local identifier (LID), queue pair number (QPN), remote key (rkey), and local key (Ikey). The LID is a local address that is assigned to each HCA port by the subnet manager during subnet initialization. The QPN is an identifier that represents a QP and it is only unique within a HCA. Both the local key (Ikey) and the remote key (rkey) are location-dependent attributes that need to be changed after migration. They are the authorization keys to access the local and the remote memory regions, respectively.

Alternatively, there can be other approaches for remapping these QP attributes which do not form part of the claimed invention. One approach is to offload the remapping mechanism to the hardware. This approach may require modifications to the hardware and software architecture. Another alternative is to place the mapping table in the kernel and remap the cached QP attributes to a new set of QP attributes after the VF is reattached. This approach may require a mapping table for every attribute: LID, rkey, Ikey and QPN. Additionally, the QPN may not be unique within the subnet and might cause a conflict after the migration.

Thus, the location dependent resources, such as the QP attributes 432, can be cached by the user application 421. Furthermore, after the QP is established, the time-critical operations by the user application 421 can be performed directly based on the libraries in the user space 401 without the interception from the kernel 410.

### Queue Pair (QP) State

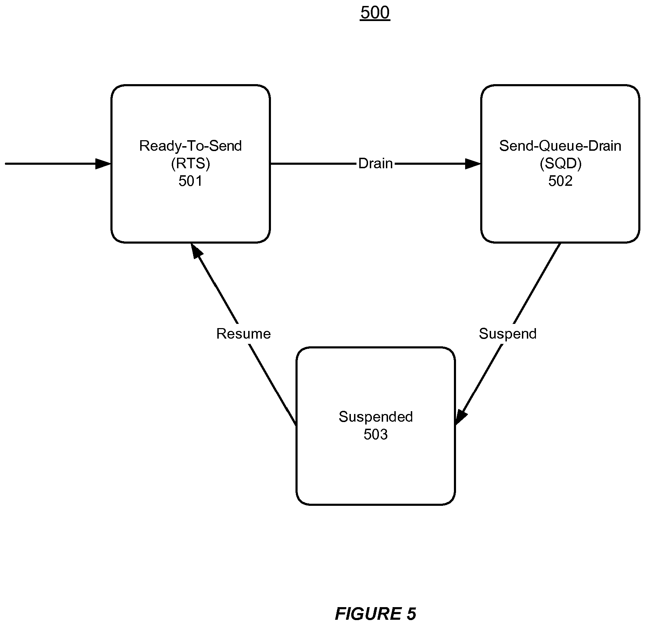

**Figure 5** shows an illustration of using a deterministic state to suspend and resume a queue pair (QP), in accordance with an embodiment of the invention. As shown in Figure 5, the network model 500 allows a queue pair (QP) to be in various defined states, such as a ready-to-read (RTS) state 501 and a send-queue-drain (SQD) state 502. Additionally, the network model 500 can use a deterministic state, e.g. a suspended state 503, to suspend and resume the QP before and after a live migration.

The suspended state 503 can be based on the send-queue-drain (SQD) state 502. Before a QP is allowed to transit from a RTS state 501 to the SQD state 502, all outstanding operations in the work queues of the QP are drained successfully. Thus, the SQD state 502 can ensure that all outstanding send operations are completed before a QP can be temporarily suspended. Using this approach, the QP can be in a deterministic state where no in-flight packets exist and the QP can safely be suspended and migrated.

### The Late-detach Migration Process

In accordance with an embodiment of the invention, the virtual environment reduces the service downtime during the VM migration using a late-detach approach.

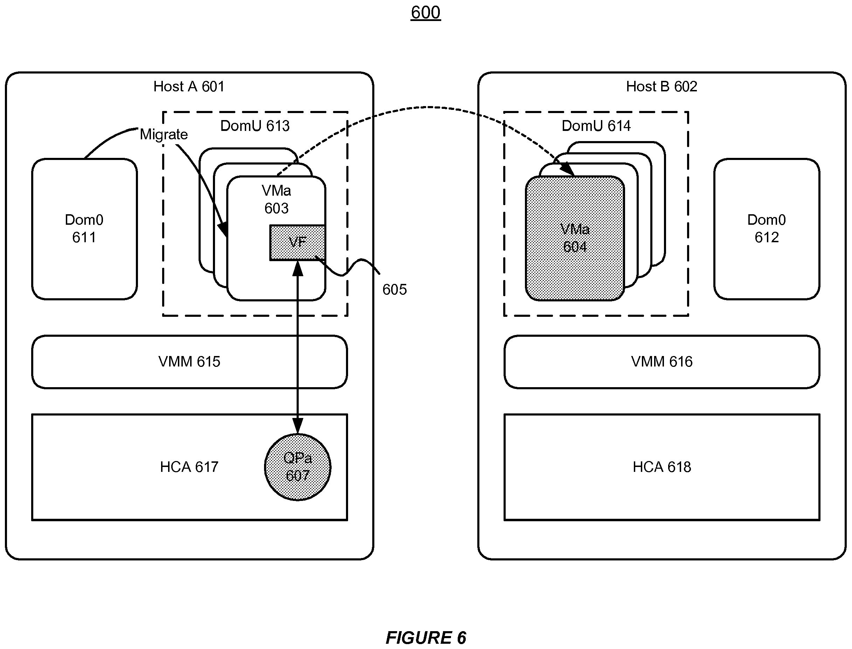

**Figure 6** shows an illustration of the live migration of a virtual machine using a bottom-up approach, in accordance with an embodiment of the invention. As shown in Figure 6, a plurality of hosts, e.g. host A-B 601-602, are interconnected via an IB network 600. Each host A-B 601-602 can include one or more virtual machine monitors (VMMs), such as VMM 615-616, that manages one or more virtual machines (VMs).

A virtual machine (VM), e.g. the VMa 603 in DomU 613, is attached with a virtual function (VF) 605, which connects to a queue pair (QP), e.g. QPa 607, on HCA 617. The privilege domain, DomO 611, initiates the migration of the VMa 603 from host A 601 to host B 602 (as VMa 604).

As shown in Figure 6, the system allows the VMa 603 to migrate without first detaching the VF 605. Then, the system detaches the VF 605 after the VMa 604 is set up on the destination host B 602 (which includes a privilege domain, DomO 612, and a guest domain, Dom U 614, supported by VMM616 and HCA 618).

Thus, the service downtime can be reduced since the IB device can remain operational until the VM is suspended. For example, the QPa 607 on HCA 617 can remain functional until the start of the stop-and-copy stage.

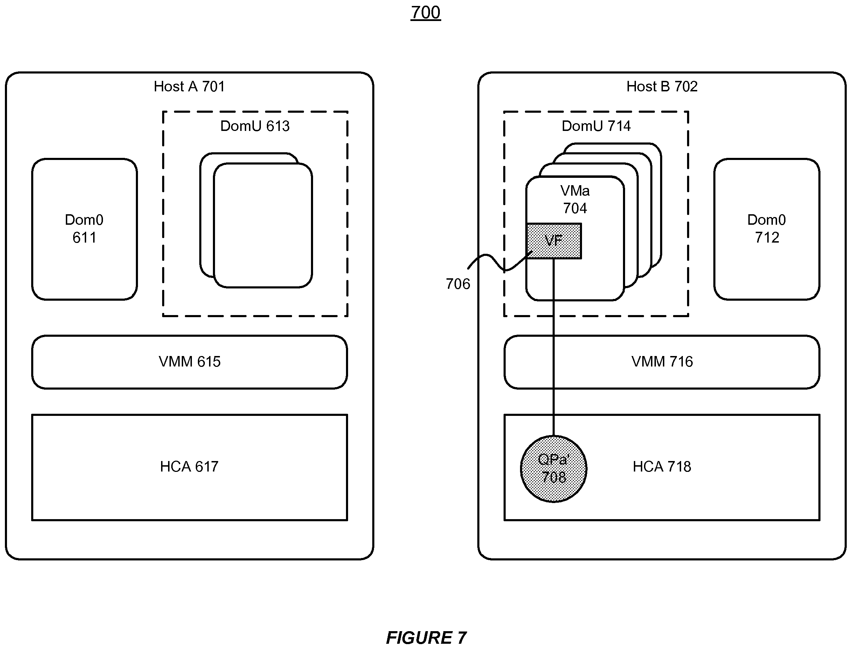

**Figure 7** shows an illustration of reactivating the virtual machine after migration, in accordance with an embodiment of the invention. As shown in Figure 7, a plurality of hosts, e.g. host A-B 701-702, are interconnected via an IB network 700. Each host A-B 701-702 can include one or more virtual machine monitors (VMMs), such as VMM 615 on the host A 701 and VMM 716 on the host B 702, which manages one or more virtual machines (VMs). Additionally, each host A-B 701-702 includes one or more HCAs, such as HCA 717 on the host A 701 and HCA 718 on the host B 702.

After the VMa 704 migrates to the destination host B 702, a new VF 706 is attached (or reattached) to the VMa 704, before the VMa 704 is resumed. The new VF 706 is connected to a newly created QPa' 708 on HCA 718.

Using the Xen virtualization model, the privilege domain, e.g. DomO 712, on the host B 702 attaches the new VF 706 at the final stage of the restoration of the VMa 704 in the guest domain, DomU 714, instead of initializing the VF 706 during the early restoration. Furthermore, DomO 712 can perform a reconfiguration process that may include recreating the hardware dependent resources and reestablishing the connection with the remote QP.

### Reestablishing a Remote Connection

The IB network can provide multiple connection-oriented transport services. The system can recreate the QP on the destination host and re-establish the connection with the remote QP after the migration is completed, in the situation when the VM migration happens at a time when both QPs are still in operation, e.g. in a RTS state.

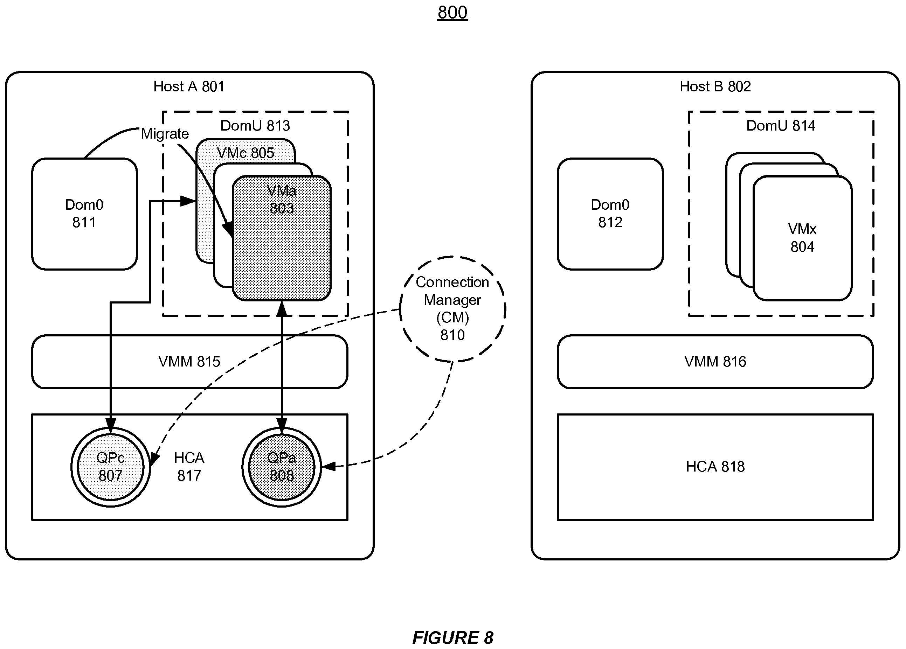

**Figure 8** shows an illustration of two queue pairs (QPs) before the live migration of a virtual machine, in accordance with an embodiment of the invention. As shown in Figure 8, a plurality of hosts, e.g. host A-B 801-802, are interconnected via the IB network 800. Each host A-B 701-702 can include one or more virtual machine monitors (VMMs), such as VMMs 815-816, and one or more HCAs, such as HCAs 817-818.

In the example as shown in Figure 8, a QPa 808, which is associated with the VMa 803 on the host A 801, can be in communication with a peer QP, e.g. QPc 807, which is associated with the VMc 805, before the live migration of VMa 803 from the host A 801 to the host B 802.

During the live migration of VMa 803, a communication manager (CM) 810 can be configured to tolerate the device removal event, in order to successfully migrate the VMa 803. The CM 810 can disconnect the connection after the device is removed and can restart the connection once a new device is reattached. Additionally, the system can implement a reconnection mechanism, e.g. in the user space library.

As shown in Figure 8, in the example of a Xen-based architecture, the privileged domain, Dom 0 811 on the host A 801, initiates the migration of VMa 803 in a guest domain, DomU 813, to the host B 802. Also, the host B 802 includes a privileged domain, Dom 0 812, and a guest domain, DomU 814, which includes one or more VMs (e.g. VMx 804).

In accordance with an embodiment of the invention, there can be a one-to-one relationship between a VM and a guest domain (i.e. DomU) in a virtualization model, such as the Xen model. Furthermore, the DomU, which is a resource container on the physical server that hosts a VM under the control of the VMM/Dom0, can be used to represent a Xen notion of a VM. Additionally, one-to-many, or many-to-one relationship may be existing between the VMs and the guest domains in other virtualization models without limitation. For example, a guest domain may be able to host different VMs.

Furthermore, Dom 0 811 can execute the PCI-detach script to unplug a VF from the VMa 803. This operation can also trigger a suspend stage, where the kernel IB PCI module on VMa 803 can verify that the PID exists in the QPN-PID mapping table 310 and can signal a suspend event to notify the user process in VMa 803.

The migrating VMa 808 can save the QP attributes and the out-of-band socket address to VMc 807 before the pinned memory is released. Here, the socket address can be used as a location independent address, for the VM, that does not change after the migration. The location independent socket address can be used to identify the VMs, when vGUIDs are not used as a unique and static "name" throughout the VM lifecycle.

Then, after the pinned memory is released, the VF can be successfully detached from the VMa 808 and the user process associated with the VMa 808 can remain in the suspend state until it receives a resume event.

When the user process receives the suspend event, it can set the suspend flag and stops the remaining send operations. Then, the user process can generate a suspend message, using a reliable connection, to notify the user library on the VMc 807, that QPa 808 is going to be suspended. When the work queues on both QPs 807-808 have been drained, the VMc 805 can reset the QPc 807 and can wait for a new CM event.

Furthermore, during the live migration, the migrating VMa 803 can prevent the QPc 807 from sending data to the migrating VMa 803, and can forward a reliable connection (RC) suspend message to notify the QPc 807 about the migration. After the QPc 807 receives the message, it can ensure that all work queues are drained successfully. Then, the QPc 807 can transit to the RESET state and waits for a new CM event in order to resume the communication.

Thus, the system can maintain the connection between VMa 808 and VMc 805 after the migration.

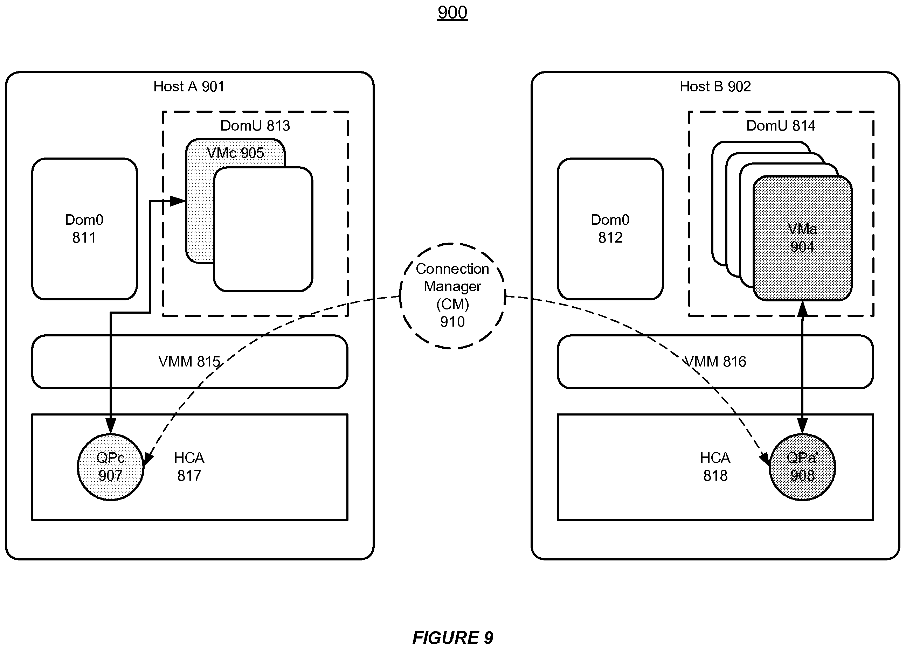

**Figure 9** shows an illustration of two queue pairs (QPs) in communication after the live migration of a virtual machine, in accordance with an embodiment of the invention. As shown in Figure 9, a plurality of hosts, e.g. host A-B 901-902, are interconnected via the IB network 900.

The VMa 904 on the host B 902 is migrated from the host 901. Then, the system attaches a new VF to VMa 904, and can trigger the resume stage. The system can signal a resume event for notifying the user process in VMa 904 to set the resume flag and to create a new QP, e.g. QPa' 908. Furthermore, a pointer to the new QP attributes is added to the mapping table with the previous QPN used as the retrieval key.

After the CM 910 reestablishes the connection with the VMc 905 (or VMc 805 in Figure 8) using a location independent addresses for the VM, the communication can be resumed by exchanging QP attributes and transferring both QPs 907-908 into the RTS state. At this point, the application can continue to use the cached QP attributes, with all operations intercepted by the user library to retrieve the correct QP attributes from the mapping table.

The present invention may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a storage medium or computer readable medium (media) having instructions stored thereon/in which can be used to program a computer to perform any of the processes of the present invention. The storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The foregoing description of the present invention has been provided for the purposes of illustration and description. It is not intended to be exhaustive or to limit the invention to the precise forms disclosed. Many modifications and variations will be apparent to the practitioner skilled in the art. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims.

## Claims

1. A system (100, ) for supporting virtual machine live migration in an Infiniband network, comprising:
one or more microprocessors;
a plurality of hosts (101, 102), running on the one or more microprocessors, wherein the plurality of hosts are interconnected via the network and each host (101, 102) includes a privileged domain (111, 112) and a guest domain (113, 114);
one or more virtual machines (103, 104), wherein at least one virtual machine (103) in the one or more virtual machines (103, 104) operates to perform a live migration from the guest domain (113) of a first host (101) to the guest domain (114) of a second host (102),
wherein said at least one virtual machine (103) is attached with a virtual function (105) that is associated with a queue pair, "QP" (107),
wherein said at least one virtual machine (103) includes:
a user space (302), wherein the user space (302) includes one or more user processes (311-313, 411-413), each of which is assigned a process identification number, "PID" (321), and the one or more user processes (311-313, 411-413), use the QP (107) to communicate with other processes of the system; and
a kernel space (301), wherein the kernel space (301) includes a translation table (310) that maps each PID to a queue pair number, "QPN" (332) of the QP (107),
wherein the QP (107) is supported by a host channel adapter, "HCA" (117), on the first host (101), and wherein the virtual function (105) is provided in a single-root input/output, "I/O", virtualization model, "SR-IOV", and
wherein the QP (107) has location-dependent attributes (432) that are associated with the HCA (117) and the first host (101), the location-dependent attributes (432) comprising a local identifier, "LID" of a port of the HCA (117), the QPN (332), a remote authorization key, "rkey", and a local authorization key, "Ikey", to access remote and local memory regions, respectively; and
a late-detach migration process is used to reduce network/service down-time during virtual machine live migration, wherein the late-detach migration process comprises:
migrating the virtual machine (103) from the first host (101) to the second host (102);
detaching, by the privileged domain (111) of the first host (101), the virtual function (105) after the virtual machine (103) is migrated to the second host (102) by:
using the translation table (310) to identify the user process (311, 411) corresponding to the QP (107) associated with the virtual function (105);
notifying the user process (311, 411) to release pinned memory,
suspending the QP (107) after the pinned memory is released,
unloading the kernel space (301) and detaching the virtual function (105);
attaching, by the privileged domain (112) of the second host (102), a new virtual function (106) to the virtual machine (104) at the second host (102);
creating a new QP (108) for the new virtual function (106);
adding a pointer to the location-dependent attributes (432) of the new QP (108) to a mapping table (433) of the user process (311, 411), wherein the location-dependent attributes (432) of the new QP (108) are associated with a HCA (118) on the second host (102); and
using the QPN (332) of the QP (108) and the pointer in the mapping table (433) to retrieve the location-dependent attributes (432) for the new QP (108) such that communications using the location-dependent attributes (432) of the QP (107) are directed to the new QP (108).

2. The system according to Claim 1, further comprising:
at least one virtual machine monitor (115, 116) that manages the one or more virtual machines (103, 104).

3. The system according to any one of the preceding Claims, wherein:
QP state information can be migrated along with an image of said at least one virtual machine (103) in order to reallocate physical resources of QPs (107, 108).

4. The system according to any one of the preceding Claims, wherein at least one of:
a peer QP (807) can halt communication with the QP (107) during the live migration of said at least one virtual machine (103);
a connection manager, "CM" (810, 910), can reestablish a new connection between the new QP (108) and the peer QP (807) after the migration is completed.

5. A method for supporting virtual machine live migration in an Infiniband network, comprising:
providing a plurality of hosts (101, 102), wherein the plurality of hosts (101, 102) are interconnected via the network and each host (101, 102) includes a privileged domain (111, 112) and a guest domain (113, 114);
providing one or more virtual machines (103, 104),
wherein at least one virtual machine (103) in the one or more virtual machines is attached with a virtual function (105) that is associated with a queue pair, "QP" (107),
wherein said at least one virtual machine (103) includes:
a user space (302), wherein the user space (302) includes one or more user processes (311-313, 411-413), each of which is assigned a process identification number, "PID" (321), and the one or more user processes (311-313, 411-413), use the QP (107) to communicate with other processes of the system; and
a kernel space (301), wherein the kernel space (301) includes a translation table (310) that maps each PID to a queue pair number, "QPN" (332) of the QP (107),
wherein the QP (107) is supported by a host channel adapter, "HCA" (117), on a first host (101), and wherein the virtual function (105) is provided in a single-root input/output, "I/O", virtualization model, "SR-IOV", and
wherein the QP (107) has location-dependent attributes (432) that are associated with the HCA (117) and the first host (101), the location-dependent attributes (432) comprising a local identifier, "LID" of a port of the HCA (117), the QPN (332), a remote authorization key, "rkey", and a local authorization key, "Ikey", to access remote and local memory regions, respectively; and
performing, via said at least one virtual machine (103), a live migration from the guest domain (113) of the first host (101) to the guest domain (114) of a second host (102); and
using a late-detach migration process to reduce network/service down-time during virtual machine live migration, wherein the late-detach migration process comprises:
migrating the virtual machine (103) from the first host (101) to the second host (102);
detaching, by the privileged domain (111) of the first host (101), the virtual function (105) after the virtual machine (103) is migrated to the second host (102) by:
using the translation table (310) to identify the user process (311, 411) corresponding to the QP (107) associated with the virtual function (105);
notifying the user process (311, 411) to release pinned memory,
suspending the QP (107) after the pinned memory is released,
unloading the kernel space (301) and detaching the virtual function (105);
attaching, by the privileged domain (112) of the second host (102), a new virtual function (106) to the virtual machine (104) at the second host (102);
creating a new QP (108) for the new virtual function (106);
adding a pointer to the location-dependent attributes (432) of the new QP (108) to a mapping table (433) of the user process (311, 411), wherein the location-dependent attributes (432) of the new QP (108) are associated with a HCA (118) on the second host (102); and
using the QPN (332) of the QP (108) and the pointer in the mapping table (433) to retrieve the location-dependent attributes (432) for the new QP (108) such that communications using the location-dependent attributes (432) of the QP (107) are directed to the new QP (108).

6. The method according to Claim 5, further comprising at least one of:
migrating QP state information along with an image of said at least one virtual machine (103) in order to reallocate physical resources of QPs (107, 108);
configuring a peer QP (807) to halt communication with the QP (107) during the live migration of said at least one virtual machine (103).

7. A computer program product having instructions that when executed cause a system to perform the method of any one of Claims 5-6.

8. The computer program product of Claim 7, further comprising a computer readable storage medium for storing the instructions.

## Patentansprüche

1. System (100) zum Unterstützen von Live-Migration virtueller Maschinen in einem Infiniband-Netzwerk, wobei es aufweist:
einen oder mehrere Mikroprozessoren;
eine Mehrzahl von Hosts (101, 102), die auf dem einen oder den mehreren Mikroprozessoren laufen, wobei die Mehrzahl von Hosts über das Netzwerk untereinander verbunden ist und jeder Host (101, 102) eine privilegierte Domäne (111, 112) und eine Gastdomäne (113, 114) enthält;
eine oder mehrere virtuelle Maschinen (103, 104), wobei mindestens eine virtuelle Maschine (103) in der einen oder den mehreren virtuellen Maschinen (103, 104) zum Durchführen einer Live-Migration von der Gastdomäne (113) eines ersten Hosts (101) auf die Gastdomäne (114) eines zweiten Hosts (102) tätig ist,
wobei die mindestens eine virtuelle Maschine (103) mit einer virtuellen Funktion (105) angebunden ist, die einem Warteschlangenpaar (en: queue pair) "QP" (107) zugeordnet ist,
wobei die mindestens eine virtuelle Maschine (103) enthält:
einen Benutzerraum (302), wobei der Benutzerraum (302) einen oder mehrere Benutzerprozesse (311-313, 411-413) enthält, von denen jedem eine Prozessidentifikationsnummer "PID" (321) zugeordnet ist, und der eine oder die mehreren Benutzerprozesse (311-313, 411-413) das QP (107) zum Kommunizieren mit anderen Prozessen des Systems verwenden; und
einen Kernel-Raum (301), wobei der Kernel-Raum (301) eine Übersetzungstabelle (310) enthält, die jede PID auf eine Warteschlangenpaarnummer "QPN" (332) des QP (107) abbildet,
wobei das QP (107) von einem "Host Channel Adapter" "HCA" (117) auf dem ersten Host (101) unterstützt wird und wobei die virtuelle Funktion (105) in einem Single-Root-Input/Output(I/O)-Virtualisierungsmodell "SR-IOV" bereitgestellt ist und
wobei das QP (107) ortsabhängige Attribute (432) aufweist, die dem HCA (117) und dem ersten Host (101) zugeordnet sind, wobei die ortsabhängigen Attribute (432) eine Lokalkennung (en: local identifier) "LID" eines Ports des HCA (117), die QPN (332), einen Fernautorisierungsschlüssel (en: remote authorization key) "rkey" und einen Lokalautorisierungsschlüssel (en: local authorization key) "lkey" zum Zugreifen auf entfernte bzw. lokale Speicherbereiche umfassen; und
wobei ein Spätablösungsmigrationsprozess dafür verwendet wird, eine Netzwerk/Dienst-Downtime während einer Live-Migration einer virtuellen Maschine zu reduzieren, wobei der Spätablösungsmigrationsprozess umfasst:
Migrieren der virtuellen Maschine (103) von dem ersten Host (101) auf den zweiten Host (102);
Ablösen der virtuellen Funktion (105) durch die privilegierte Domäne (111) des ersten Hosts (101) nach dem Migrieren der virtuellen Maschine (103) auf den zweiten Host (102) durch:
Verwenden der Übersetzungstabelle (310) zum Identifizieren des Benutzerprozesses (311, 411), der dem QP (107) entspricht, das der virtuellen Funktion (105) zugeordnet ist;
Benachrichtigen des Benutzerprozesses (311, 411), "Pinned Memory" freizugeben,
Aussetzen des QP (107) nach dem Freigeben des "Pinned Memory",
Entladen des Kernel-Raums (301) und Ablösen der virtuellen Funktion (105);
Anfügen einer neuen virtuellen Funktion (106) an die virtuelle Maschine (104) an dem zweiten Host (102) durch die privilegierte Domäne (112) des zweiten Hosts (102) ;
Erzeugen eines neuen QP (108) für die neue virtuelle Funktion (106);
Hinzufügen eines Zeigers auf die ortsabhängigen Attribute (432) des neuen QP (108) zu einer Abbildungstabelle (433) des Benutzerprozesses (311, 411), wobei die ortsabhängigen Attribute (432) des neuen QP (108) einem HCA (118) auf dem zweiten Host (102) zugeordnet sind; und
Verwenden der QPN (332) des QP (108) und des Zeigers in der Abbildungstabelle (433) zum Abrufen der ortsabhängigen Attribute (432) für das neue QP (108), sodass Kommunikationen, die die ortsabhängigen Attribute (432) des QP (107) verwenden, an das neue QP (108) gerichtet werden.

2. System nach Anspruch 1, das ferner aufweist:
mindestens einen "Virtual Machine Monitor" (115, 116), der die eine oder die mehreren virtuellen Maschinen (103, 104) verwaltet.

3. System nach einem der vorhergehenden Ansprüche, wobei:
QP-Zustandsinformation zusammen mit einem Image der mindestens einen virtuellen Maschine (103) migriert werden kann, um physische Ressourcen von QP (107, 108) neu zuzuteilen.

4. System nach einem der vorhergehenden Ansprüche, wobei:
ein Peer-QP (807) die Kommunikation mit dem QP (107) während der Live-Migration der mindestens einen virtuellen Maschine (103) anhalten kann; und/oder
ein Verbindungsmanager (en: connection manager) "CM" (810, 910) eine neue Verbindung zwischen dem neuen QP (108) und dem Peer-QP (807) erneut aufbauen kann, nachdem die Migration abgeschlossen ist.

5. Verfahren zum Unterstützen von Live-Migration virtueller Maschinen in einem Infiniband-Netzwerk, wobei es umfasst:
Bereitstellen einer Mehrzahl von Hosts (101, 102), wobei die Mehrzahl von Hosts (101, 102) über das Netzwerk untereinander verbunden ist und jeder Host (101, 102) eine privilegierte Domäne (111, 112) und eine Gastdomäne (113, 114) enthält;
Bereitstellen einer oder mehrerer virtueller Maschinen (103, 104),
wobei mindestens eine virtuelle Maschine (103) in der einen oder den mehreren virtuellen Maschinen mit einer virtuellen Funktion (105) angebunden ist, die einem Warteschlangenpaar "QP" (107) zugeordnet ist,
wobei die mindestens eine virtuelle Maschine (103) enthält:
einen Benutzerraum (302), wobei der Benutzerraum (302) einen oder mehrere Benutzerprozesse (311-313, 411-413) enthält, von denen jedem eine Prozessidentifikationsnummer "PID" (321) zugeordnet ist, und der eine oder die mehreren Benutzerprozesse (311-313, 411-413) das QP (107) zum Kommunizieren mit anderen Prozessen des Systems verwenden; und
einen Kernel-Raum (301), wobei der Kernel-Raum (301) eine Übersetzungstabelle (310) enthält, die jede PID auf eine Warteschlangenpaarnummer "QPN" (332) des QP (107) abbildet,
wobei das QP (107) von einem "Host Channel Adapter" "HCA" (117) auf einem ersten Host (101) unterstützt wird und wobei die virtuelle Funktion (105) in einem Single-Root-Input/Output(I/O)-Virtualisierungsmodell "SR-IOV" bereitgestellt ist und
wobei das QP (107) ortsabhängige Attribute (432) aufweist, die dem HCA (117) und dem ersten Host (101) zugeordnet sind, wobei die ortsabhängigen Attribute (432) eine Lokalkennung "LID" eines Ports des HCA (117), die QPN (332), einen Fernautorisierungsschlüssel "rkey" und einen Lokalautorisierungsschlüssel "lkey" zum Zugreifen auf entfernte bzw. lokale Speicherbereiche umfassen; und
Durchführen einer Live-Migration von der Gastdomäne (113) des ersten Hosts (101) auf die Gastdomäne (114) eines zweiten Hosts (102) durch die mindestens eine virtuelle Maschine (103); und
Verwenden eines Spätablösungsmigrationsprozesses zum Reduzieren einer Netzwerk/Dienst-Downtime während einer Live-Migration einer virtuellen Maschine, wobei der Spätablösungsmigrationsprozess umfasst:
Migrieren der virtuellen Maschine (103) von dem ersten Host (101) auf den zweiten Host (102);
Ablösen der virtuellen Funktion (105) durch die privilegierte Domäne (111) des ersten Hosts (101) nach dem Migrieren der virtuellen Maschine (103) auf den zweiten Host (102) durch:
Verwenden der Übersetzungstabelle (310) zum Identifizieren des Benutzerprozesses (311, 411), der dem QP (107) entspricht, das der virtuellen Funktion (105) zugeordnet ist;
Benachrichtigen des Benutzerprozesses (311, 411), "Pinned Memory" freizugeben,
Aussetzen des QP (107) nach dem Freigeben des "Pinned Memory",
Entladen des Kernel-Raums (301) und Ablösen der virtuellen Funktion (105);
Anfügen einer neuen virtuellen Funktion (106) an die virtuelle Maschine (104) an dem zweiten Host (102) durch die privilegierte Domäne (112) des zweiten Hosts (102) ;
Erzeugen eines neuen QP (108) für die neue virtuelle Funktion (106);
Hinzufügen eines Zeigers auf die ortsabhängigen Attribute (432) des neuen QP (108) zu einer Abbildungstabelle (433) des Benutzerprozesses (311, 411), wobei die ortsabhängigen Attribute (432) des neuen QP (108) einem HCA (118) auf dem zweiten Host (102) zugeordnet sind; und
Verwenden der QPN (332) des QP (108) und des Zeigers in der Abbildungstabelle (433) zum Abrufen der ortsabhängigen Attribute (432) für das neue QP (108), sodass Kommunikationen, die die ortsabhängigen Attribute (432) des QP (107) verwenden, an das neue QP (108) gerichtet werden.

6. Verfahren nach Anspruch 5, das ferner umfasst:
Migrieren von QP-Zustandsinformation zusammen mit einem Image der mindestens einen virtuellen Maschine (103), um physische Ressourcen von QP (107, 108) neu zuzuteilen; und/oder
Konfigurieren eines Peer-QP (807) zum Anhalten der Kommunikation mit dem QP (107) während der Live-Migration der mindestens einen virtuellen Maschine (103).

7. Computerprogrammprodukt, das Anweisungen aufweist, die bei Ausführung bewirken, dass ein System das Verfahren nach einem der Ansprüche 5-6 durchführt.

8. Computerprogrammprodukt nach Anspruch 7, das ferner ein computerlesbares Speichermedium zum Speichern der Anweisungen aufweist.

## Revendications

1. Système (100) pour prendre en charge la migration en direct de machines virtuelles dans un réseau Infiniband, comprenant :
un ou plusieurs microprocesseurs ;
une pluralité d'hôtes (101 , 102), tournant sur ce ou ces microprocesseurs, cette pluralité d'hôtes étant interconnectés via le réseau et chaque hôte (101, 102) comprenant un domaine privilégié (111, 112) et un domaine invité (113, 114) ;
une ou plusieurs machines virtuelles (103, 104), au moins une machine virtuelle (103) parmi cette ou ces machines virtuelles (103, 104) fonctionnant pour exécuter une migration en direct du domaine invité (113) d'un premier hôte (101) au domaine invité (114) d'un deuxième hôte (102),
ladite au moins une machine virtuelle (103) étant attachée avec une fonction virtuelle (105) qui est associée à une paire de files d'attente, "QP" (107),
ladite au moins une machine virtuelle (103) comprenant :
un espace utilisateur (302), cet espace utilisateur (302) comprenant un ou plusieurs processus utilisateur (311-313, 411-413), à chacun desquels un numéro d'identification de processus, "PID", (321) est attribué, et ce ou ces processus utilisateur (311-313, 411-413) utilisant la QP (107) pour communiquer avec d'autres processus du système ; et
un espace noyau (301), cet espace noyau (301) comprenant une table de traduction (310) qui établit une correspondance entre chaque PID et un numéro de paire de files d'attente, "QPN", (332) de la QP (107),
la QP (107) étant prise en charge par un adaptateur de canal hôte, "HCA", (117), sur le premier hôte (101), et la fonction virtuelle (105) étant fournie dans un modèle de virtualisation à entrée/sortie, "I/O", à racine unique, "SR-IOV", et
la QP (107) ayant des attributs dépendant de l'emplacement (432) qui sont associés au HCA (117) et au premier hôte (101), ces attributs dépendant de l'emplacement (432) comprenant un identifiant local, "LID", d'un port du HCA (117), le QPN (332), une clé d'autorisation distante, "rkey", et une clé d'autorisation locale, "Ikey", pour accéder aux régions de mémoire distante et locale, respectivement ; et
un processus de migration à détachement tardif étant utilisé afin de réduire la période d'indisponibilité du réseau/service pendant la migration en direct de la machine virtuelle, ce processus de migration à détachement tardif comprenant :
la migration de la machine virtuelle (103) du premier hôte (101) au deuxième hôte (102) ;
le détachement, par le domaine privilégié (111) du premier hôte (101), de la fonction virtuelle (105) après que la machine virtuelle (103) a été migrée au deuxième hôte (102) en :
utilisant la table de traduction (310) pour identifier le processus utilisateur (311, 411) correspondant à la QP (107) associée à la fonction virtuelle (105) ;
en notifiant le processus utilisateur (311, 411) pour qu'il libère une mémoire épinglée,
en suspendant la QP (107) après que la mémoire épinglée a été libérée,
en déchargeant l'espace noyau (301) et en détachant la fonction virtuelle (105) ;
l'attachement, par le domaine privilégié (112) du deuxième hôte (102), d'une nouvelle fonction virtuelle (106) à la machine virtuelle (104) au niveau du deuxième hôte (102) ;
la création d'une nouvelle QP (108) pour la nouvelle fonction virtuelle (106) ;
l'addition d'un pointeur vers les attributs dépendants de l'emplacement (432) de la nouvelle QP (108) à une table d'établissement de correspondance (433) du processus utilisateur (311, 411), les attributs dépendant de l'emplacement (432) de la nouvelle QP (108) étant associés à un HCA (118) sur le deuxième hôte (102) ; et
l'utilisation du QPN (332) de la QP (108) et du pointeur dans la table de mise en correspondance (433) pour récupérer les attributs dépendant de l'emplacement (432) pour la nouvelle QP (108) de manière à ce que les communications utilisant les attributs dépendant de l'emplacement (432) de la QP (107) soient dirigés vers la nouvelle QP (108).

2. Système selon la revendication 1, comprenant en outre :
au moins un moniteur de machines virtuelles (115, 116) qui gère la ou les machines virtuelles (103, 104).

3. Système selon l'une quelconque des revendications précédentes, dans lequel :
les informations d'état de QP peuvent être migrées avec une image de ladite au moins une machine virtuelle (103) afin de réattribuer des ressources physiques de paires QP (107, 108).

4. Système selon l'une quelconque des revendications précédentes, dans lequel au moins soit :
une QP homologue (807) peut arrêter la communication avec la QP (107) pendant la migration en direct de ladite au moins une machine virtuelle (103) ;
soit un gestionnaire de connexion, "CM" (810, 910), peut rétablir une nouvelle connexion entre la nouvelle QP (108) et la QP homologue (807) après que la migration a été achevée.

5. Procédé pour prendre en charge la migration en direct de machines virtuelles dans un réseau Infiniband, comprenant :
la prévision d'une pluralité d'hôtes (101 , 102), cette pluralité d'hôtes (101, 102) étant interconnectés via le réseau et chaque hôte (101, 102) comprenant un domaine privilégié (111, 112) et un domaine invité (113, 114) ;
la prévision d'une ou de plusieurs machines virtuelles (103, 104),
au moins une machine virtuelle (103) parmi cette ou ces machines virtuelles étant attachée avec une fonction virtuelle (105) qui est associée à une paire de files d'attente, "QP" (107),
ladite au moins une machine virtuelle (103) comprenant :
un espace utilisateur (302), cet espace utilisateur (302) comprenant un ou plusieurs processus utilisateur (311-313, 411-413), à chacun desquels un numéro d'identification de processus, "PID", (321), est attribué, et ce ou ces processus utilisateur (311-313, 411-413) utilisant la QP (107) pour communiquer avec d'autres processus du système ; et
un espace noyau (301), cet espace noyau (301) comprenant une table de traduction (310) qui établit une correspondance entre chaque PID et un numéro de paire de files d'attente, "QPN", (332) de la QP (107),
la QP (107) étant prise en charge par un adaptateur de canal hôte, "HCA", (117), sur un premier hôte (101), et la fonction virtuelle (105) étant fournie dans un modèle de virtualisation à entrée/sortie, "I/O", à racine unique, "SR-IOV", et
la QP (107) ayant des attributs dépendant de l'emplacement (432) qui sont associés au HCA (117) et au premier hôte, ces attributs dépendant de l'emplacement (432) comprenant un identifiant local, "LID", d'un port du HCA (117), le QPN (332), une clé d'autorisation distante, "rkey", et une clé d'autorisation locale, "Ikey", pour accéder aux régions de mémoire distante et locale, respectivement ; et
l'exécution, via ladite au moins une machine virtuelle (103), d'une migration en direction du domaine invité (113) du premier hôte (101) au domaine invité (114) d'un deuxième hôte (102) ; et
l'utilisation d'un processus de migration à détachement tardif afin de réduire la période d'indisponibilité du réseau/service pendant la migration en direct de la machine virtuelle, ce processus de migration à détachement tardif comprenant :
la migration de la machine virtuelle (103) du premier hôte (101) au deuxième hôte (102) ;
le détachement, par le domaine privilégié (111) du premier hôte (101), de la fonction virtuelle (105) après que la machine virtuelle (103) a été migrée jusqu'au deuxième hôte (102) en :
utilisant la table de traduction (310) pour identifier le processus utilisateur (311, 411) correspondant à la QP (107) associée à la fonction virtuelle (105) ;
en notifiant le processus utilisateur (311, 411) pour libérer une mémoire épinglée,
en suspendant la QP (107) après que la mémoire épinglée a été libérée,
en déchargeant l'espace noyau (301) et en détachant la fonction virtuelle (105) ;
l'attachement, par le domaine privilégié (112) du deuxième hôte (102), d'une nouvelle fonction virtuelle (106) à la machine virtuelle (104) au niveau du deuxième hôte (102) ;
la création d'une nouvelle QP (108) pour la nouvelle fonction virtuelle (106) ;
l'addition d'un pointeur vers les attributs dépendants de l'emplacement (432) de la nouvelle QP (108) à une table d'établissement de correspondance (433) du processus utilisateur (311, 411), les attributs dépendant de l'emplacement (432) de la nouvelle QP (108) étant associés à un HCA (118) sur le deuxième hôte (102) ; et
l'utilisation du QPN (332) de la QP (108) et du pointeur dans la table de mise en correspondance (433) pour récupérer les attributs dépendant de l'emplacement (432) pour la nouvelle QP (108) de manière à ce que les communications utilisant les attributs dépendant de l'emplacement (432) de la QP (107) soient dirigés vers la nouvelle QP (108).

6. Procédé selon la revendication 5, comprenant en outre au moins soit :
la migration des informations d'état de QP avec une image de ladite au moins une machine virtuelle (103) afin de réattribuer des ressources physiques de paires QP (107, 108) ;
soit la configuration d'une QP homologue (807) pour arrêter la communication avec la QP (107) pendant la migration en direct de ladite au moins une machine virtuelle (103).

7. Progiciel ayant des instructions qui, lorsqu'elles sont exécutées, font exécuter à un système le procédé selon l'une quelconque des revendications 5 à 6.

8. Progiciel selon la revendication 7, comprenant en outre un support de stockage lisible par ordinateur pour y stocker les instructions.
